# FASCICULE DE BREVET EUROPEEN

(11) **EP 3 423 510 B1**
(45) Date de publication et mention de la délivrance du brevet: **17.04.2024**
(21) Numéro de dépôt: 17713718.9
(22) Date de dépôt: 28.02.2017
(51) Int. Cl.: C08G 65/40, B29C 67/00, B29C 67/04

(54) **POUDRE DE POLY-(ARYL-ETHER-CETONE) (PAEK) APTE A ETRE UTILISEE PLUSIEURS FOIS DANS DES PROCEDES DE FRITTAGE**
POLY-(ARYL-ETHER-KETON) (PAEK)PULVER ZUR MEHRMALIGEN VERWENDUNG IN SINTERVERFAHREN
POLY-(ARYL-ETHER-KETONE) (PAEK) POWDER FOR USING MULTIPLE TIMES IN SINTERING METHODS

(30) Priorité: 04.03.2016 FR 1651821
(43) Date de publication de la demande: 09.01.2019
(73) Titulaire: Arkema France, 92700 Colombes (FR)
(72) Inventeur: BRULE, Benoît, 27170 Beaumont-Le-Roger (FR); PASCAL, Jérome, 27410 Grandchain (FR)
(74) Mandataire: A.P.I. Conseil
(86) Numéro de dépôt international: PCT/FR2017/050439
(87) Numéro de publication internationale: WO 2017/149233

(56) Documents cités:
- EP-A1- 2 788 170
- EP-A1- 2 791 209
- WO-A1-2012/047613
- WO-A1-2014/191674
- WO-A1-2014/191675
- US-A1- 2008 258 330

## Description

### [Domaine technique]

L'invention porte sur les poudres notamment destinées à être utilisées dans des procédés de fabrication additive, couche par couche, d'objets tridimensionnels par frittage de ladite poudre provoqué par un rayonnement électromagnétique. En particulier, elle concerne les poudres de Poly(aryl-éther-cétone) (PAEK) et leur recyclabilité dans de tels procédés.

Le rayonnement électromagnétique peut être un faisceau laser, dans le cas du frittage laser (encore souvent dénommé « laser sintering » en terminologie anglo-saxonne), un rayonnement infrarouge ou un rayonnement UV ou toute autre source de rayonnement. Le terme « frittage » dans la présente description inclut tous ces procédés quel que soit le type de rayonnement. Même si, dans le texte qui suit, on fait référence le plus souvent au procédé de frittage laser, ce qui est écrit pour ce procédé est bien entendu valable pour les autres procédés de frittage.

### [Art antérieur]

Les Poly(aryl-éther-cétones) sont des polymères techniques hautes performances bien connus. Ils sont utilisés pour des applications contraignantes en température et/ou en contraintes mécaniques, voire chimiques. On retrouve ces polymères dans des domaines aussi variés que l'aéronautique et le spatial, les forages off-shore, l'automobile, le ferroviaire, la marine, l'éolien, le sport, le bâtiment, l'électronique ou encore les implants médicaux. Ils peuvent être mis en oeuvre par toutes les technologies de mise en oeuvre des thermoplastiques, tels que le moulage, la compression, l'extrusion, le filage, le poudrage ou encore le prototypage par frittage.

Dans le cas du frittage de la poudre par rayonnement électromagnétique, une grande partie de la poudre n'est pas utilisée au cours de chaque construction, aussi appelée « run ». Typiquement, environ 85 à 90% en poids de la poudre introduite dans la machine de frittage, n'est pas touchée par le rayonnement électromagnétique. Il apparait donc fondamental, pour des raisons économiques, de pouvoir réutiliser cette poudre, c'est-à-dire la recycler, lors de la (des) construction(s) suivante(s) (ou « run(s) » suivant(s)).

En général, lors d'une construction par frittage laser, la poudre de PAEK est chauffée à une température T, dénommée « température de construction », de l'ordre de 10 à 20°C (typiquement 15°C) en dessous de sa température de fusion Tf. Or, lors d'une construction par frittage, la poudre environnante, c'est-à-dire non touchée par le rayonnement électromagnétique, reste plusieurs heures, voire plusieurs dizaines d'heures selon la complexité de la pièce à construire, à cette température, ce qui peut entrainer une évolution de la structure du polymère constitutif de la poudre avec, par exemple, une augmentation de sa masse moléculaire. Cette augmentation de masse moléculaire entraîne une augmentation de viscosité qui devient un frein à la coalescence entre les grains de poudre au cours des runs successifs. Ce phénomène est appelé « remontée en viscosité ».

Du fait de ce changement de structure, il devient difficile voire impossible de recycler la poudre car, soit il devient impossible de fritter la poudre, soit les propriétés mécaniques de la pièce tridimensionnelle, obtenue par frittage laser d'une telle poudre recyclée, s'en trouvent diminuées et insuffisantes par la présence de porosités dans les pièces frittées.

Il existe actuellement sur le marché une poudre de Poly-(éther-éther-cétone), PEEK, commercialisée sous la référence HP3 par la société EOS, qui peut être utilisée en frittage laser. Cependant, dès le premier run, la poudre de PEEK subit une dégradation thermique telle, qu'il n'est pas possible de la réutiliser pour une deuxième construction. Par conséquent, la fabrication d'objets tridimensionnels par frittage de cette poudre est beaucoup trop coûteuse et ne peut pas être envisagée à l'échelle industrielle.

Le document US2013/0217838 propose une solution pour pouvoir recycler une poudre de PAEK en frittage laser. Il décrit plus particulièrement la possibilité de recycler une poudre de PEKK, à condition d'augmenter sensiblement la température de construction de 285°C à 300°C et d'augmenter la puissance du faisceau laser à chaque recyclage de la poudre, lors des runs successifs. Ce document décrit en effet que la poudre de PEKK utilisée n'est pas stable en température et que sa température de fusion augmente après sa première utilisation dans un procédé de frittage. Pour pouvoir contrer cette instabilité de la poudre, les paramètres de la machine de frittage sont modifiés. La puissance du faisceau laser, notamment, est augmentée à chaque run. Le fait de devoir changer ces paramètres de frittage à chaque run ralentit et rend plus difficile la production industrielle. De plus, il apparait difficile de mélanger de la poudre non recyclée avec une poudre recyclée, car les paramètres de construction sont alors complexes à régler. Enfin, le fait de devoir modifier les paramètres à chaque run, et notamment augmenter la puissance du laser, entraine une dégradation de la poudre de polymère, si bien que le nombre de recyclage de la poudre reste encore trop limité et il serait économiquement avantageux de pouvoir la recycler davantage. EP278817 A1 concerne le traitement de résine polymère et propose une solution pour pouvoir recycler une poudre de PAEK en frittage laser. Ce document décrit la possibilité de recycler une poudre de PEKK, à condition d'augmenter sensiblement la température de construction de 285 °C à 300°C et d'augmenter la puissance du faisceau laser à chaque recyclage de la poudre, lors des runs successifs.

### [Problème technique]

L'invention a donc pour but de remédier à au moins un des inconvénients de l'art antérieur. En particulier, l'invention a pour but de proposer une poudre de PAEK, en particulier une poudre apte à être utilisée plusieurs fois dans des procédés de frittage successifs, dont les paramètres restent inchangés, et permettant l'obtention d'articles tridimensionnels présentant des propriétés mécaniques satisfaisantes.

L'invention a en outre pour but de proposer un procédé de construction d'un objet tridimensionnel couche-par-couche par frittage de poudre provoqué par un rayonnement électromagnétique, en utilisant une telle poudre.

L'invention a enfin pour but de proposer un article tridimensionnel obtenu par frittage d'une telle poudre couche-par-couche à l'aide d'un rayonnement électromagnétique, ledit article tridimensionnel présentant des propriétés mécaniques satisfaisantes et sensiblement constantes quel que soit le nombre d'utilisations de la poudre.

### [Brève description de l'invention]

L'invention porte sur une poudre de poly-(aryl-éther-cétone) (PAEK), notamment une telle poudre apte à être utilisée plusieurs fois dans un procédé de construction d'objets couche-par-couche par frittage provoqué par un rayonnement électromagnétique, ladite poudre étant caractérisée en ce qu'elle est issue d'un traitement thermique préalable à une température comprise entre 260 et 290 °C, de préférence entre 280 et 290°C, et en ce qu'elle présente une température de fusion stable, à la température de construction, et inférieure ou égale à 330°C, de préférence inférieure ou égale à 320°C et de manière encore plus préférée, inférieure ou égale à 310°C, une température de fusion Tf stable signifiant que la température de fusion n'augmente pas de plus de 3°C après chaque construction par frittage laser, et en ce qu'elle comprend un mélange de poudres recyclées et non recyclées, lesdites poudres recyclées ayant été utilisées un nombre de cycles identiques et / ou différent.

Une telle poudre présente l'avantage de ne pas subir (ou peu) de remontée en viscosité à l'issue du frittage et peut ainsi être utilisée plusieurs fois, et bien plus que deux fois, dans des procédés successifs de construction par frittage, sans en changer les paramètres, tout en permettant l'obtention d'articles tridimensionnels présentant des propriétés mécaniques satisfaisantes et sensiblement constantes.

Selon d'autres caractéristiques optionnelles de la poudre :
- son traitement thermique préalable est réalisé pendant une durée comprise entre 5 min et 120 min, de préférence entre 5 min et 60 min et de manière davantage préférée entre 5 min et 30 min;
- la poudre de PAEK comprend un mélange de plusieurs polymères appartenant à la famille des PAEK, dont la température de fusion Tf est inférieure ou égale à 330°C, de préférence inférieure ou égale à 320°C et de manière encore plus préférée inférieure ou égale à 310°C,
- la poudre de PAEK comprend au moins une poudre de polyéther-cétone-cétone (PEKK) qui représente plus de 60% massique, de préférence plus de 70% massique de la poudre, borne comprise.
- la poudre est une poudre de polyéther-cétone-cétone (PEKK) ;
- la poudre de PEKK présente un pourcentage massique en motifs téréphtaliques par rapport à la somme des motifs téréphtaliques et isophtaliques compris entre 55 et 65% ;
- la poudre comprend un mélange de poudres recyclées ou non, lesdites poudres recyclées ayant été utilisées un nombre de cycles identique et/ou différent.

L'invention porte également sur une utilisation de la poudre telle que décrite ci-dessus, dans un procédé de construction d'objet couche-par-couche par frittage laser, ladite poudre étant réutilisable dans plusieurs constructions successives.

L'invention porte en outre sur un procédé de construction d'un objet tridimensionnel couche-par-couche par frittage de poudre provoqué par un rayonnement électromagnétique, caractérisé en ce que la poudre utilisée est conforme à la poudre décrite ci-dessus.

L'invention porte enfin sur un article tridimensionnel obtenu par frittage d'une poudre couche-par-couche à l'aide d'un rayonnement électromagnétique, ladite poudre étant caractérisée en ce qu'elle est conforme à la poudre décrite ci-dessus.

D'autres avantages et caractéristiques de l'invention apparaitront à la lecture de la description suivante donnée à titre d'exemple illustratif et non limitatif.

### [Description de l'invention]

En préambule, il est précisé que l'expression « compris(e) entre » utilisée dans le cadre de cette description doit s'entendre comme incluant les bornes citées.

Le terme « température de construction » désigne la température à laquelle le lit de poudre, d'une couche constitutive d'un objet tridimensionnel en construction, est chauffé pendant le procédé de frittage couche-par-couche de la poudre. Cette température de construction est inférieure à la température de fusion de la poudre de 40°C, de préférence de 30°C, de manière davantage préférée de 20°C.

Les poly-(aryl-éther-cétones) (PAEK) comportent les motifs de formules suivantes:

(- Ar - X -)

et

(- Ar₁ - Y - )

dans lesquelles :
- Ar et Ar₁ désignent chacun un radical aromatique divalent;
- Ar et Ar₁ peuvent être choisis, de préférence, parmi le 1,3-phénylène, 1,4-phénylène, le 4,4'-biphénylène, le 1,4- naphthylène, le 1,5-naphthylène et le 2,6-naphthylène ;
- X désigne un groupe électroattracteur ; il peut être choisi, de préférence, parmi le groupe carbonyle et le groupe sulfonyle,
- Y désigne un groupe choisi parmi un atome d'oxygène, un atome de soufre, un groupe alkylène, tel que -CH₂- et isopropylidène.

Dans ces motifs X et Y, au moins 50%, de préférence au moins 70% et plus particulièrement, au moins 80% des groupes X sont un groupe carbonyle, et au moins 50%, de préférence au moins 70% et plus particulièrement au moins 80% des groupes Y représentent un atome d'oxygène. Selon un mode de réalisation préféré, 100% des groupes X désignent un groupe carbonyle et 100% des groupes Y représentent un atome d'oxygène.

Plus préférentiellement, le poly-arylène-éther-cétone (PAEK) peut être choisi parmi :
- un poly-éther-cétone-cétone, également nommé PEKK, comprenant des motifs de formule I A, de formule I B et leur mélange : 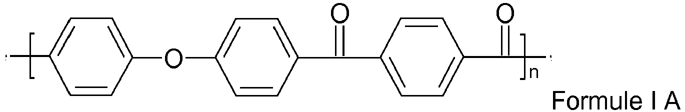 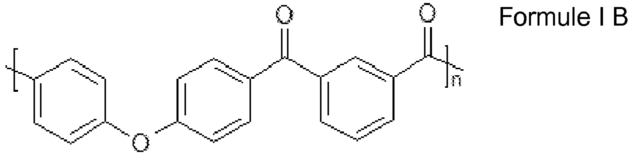
- un poly-éther-éther-cétone, également nommé PEEK, comprenant des motifs de formule II: 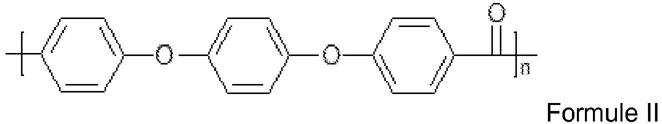
   Les enchainements peuvent être totalement para (Formule II). De la même façon on peut introduire, partiellement ou totalement, des enchaînements méta dans ces structures au niveau des éthers et des cétones selon les deux exemples des formules III et IV ci-dessous : 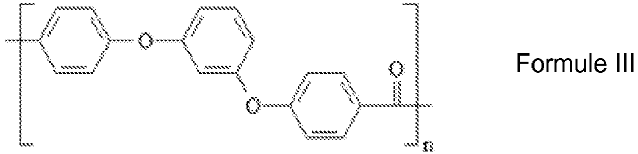
   Ou encore : 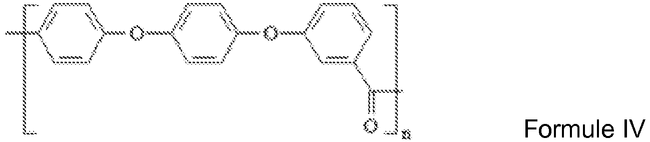
   Ou des enchainements en ortho selon la formule V : 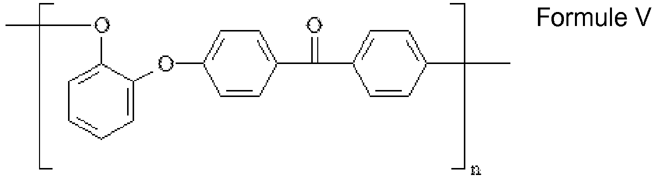
- un poly-éther-cétone, également nommé PEK, comprenant des motifs de formule VI : 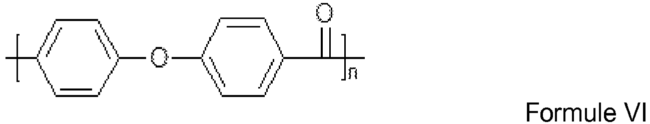 De la même façon, l'enchainement peut être totalement para mais on peut introduire aussi des enchaînements méta partiellement ou totalement (formules VII et VIII): 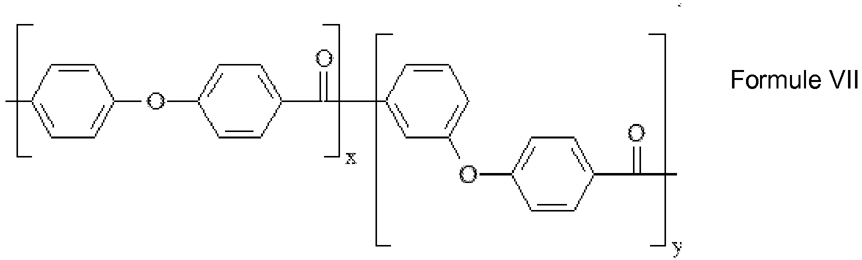 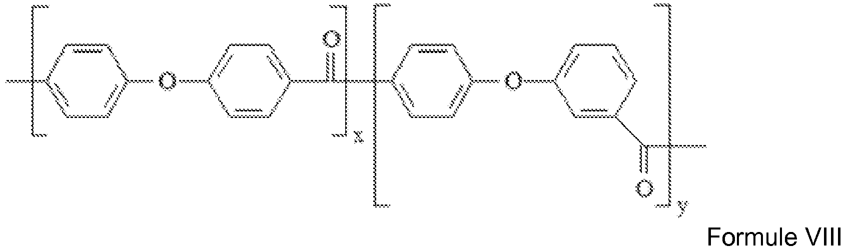
- un poly-éther-éther-cétone-cétone, également nommé PEEKK, comprenant des motifs de formules IX : 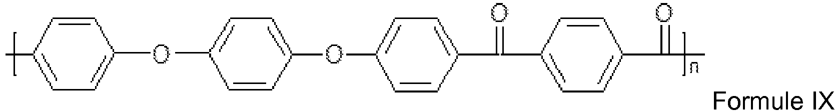 De la même façon on peut introduire des enchaînements méta dans ces structures au niveau des éthers et des cétones.
- un poly-éther-éther-éther-cétone, également nommé PEEEK, comprenant des motifs de formules X : 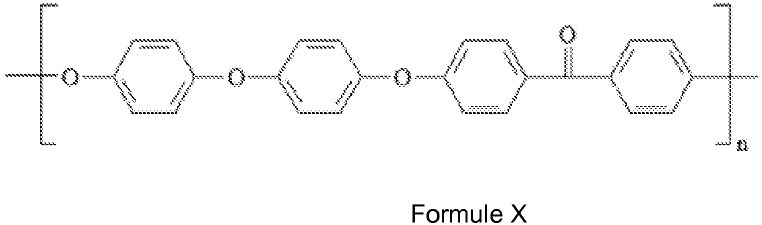 De la même façon on peut introduire des enchaînements méta dans ces structures au niveau des éthers et des cétones mais aussi des enchaînements biphénols selon la formule XI :

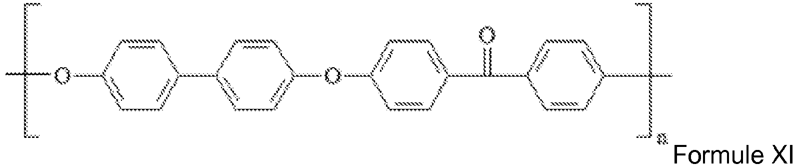

D'autres arrangements du groupe carbonyle et de l'atome d'oxygène sont également possibles.

Parmi les PAEK décrits ci-dessus, certains possèdent une température de fusion Tf supérieure à 330°C. Cependant, il est bien connu de l'homme du métier que la température de fusion peut être abaissée en introduisant des co-monomères dans les formules. A titre d'exemple, on peut citer un copolymère à base de PEEK avec ajout de co-monomères de type biphénols (formule XI).

De préférence, les PAEK utilisés dans l'invention sont choisis parmi les PEKK, copolymères à base de PEEK et copolymères à base de PEK.

De manière avantageuse, la poudre de PAEK selon l'invention destinée à être utilisée dans un procédé de construction additive d'objets, couche-par-couche, par frittage de la poudre provoqué par un rayonnement électromagnétique, est issue d'un traitement thermique préalable, réalisé à une température comprise entre 260 et 290 °C, de préférence entre 280 et 290°C.

Le polymère de PAEK n'est en effet pas utilisé tel quel, directement après sa synthèse, dans un procédé de construction couche-par-couche par frittage. Il est dans un premier temps transformé à l'état de poudre, par broyage, pour modifier la granulométrie du polymère et obtenir une poudre présentant une granulométrie adéquate, connue de l'homme du métier, compatible avec le procédé de construction par frittage laser. Cette étape de broyage peut être précédée ou suivie par d'autres traitements, tels que par exemple un ou plusieurs ajouts d'additif(s), de charge(s) ou de fibres dans la poudre.

De manière avantageuse, le traitement thermique préalable à l'étape de frittage, effectué après l'étape de broyage, permet de modifier la signature thermique du polymère, sans en modifier sa granulométrie. Dans le PEKK, le matériau polymère constitutif de la poudre initiale, obtenu directement à l'issue de la synthèse, présente deux pics de fusion, dits pic de fusion haute température et basse température. Le traitement thermique préalable permet d'éliminer le pic de fusion à basse température et de stabiliser la morphologie cristalline du polymère, sans en modifier sa température de fusion haute.

Grâce à ce traitement thermique préalable, la poudre selon l'invention présente une température de fusion stable, à la température de construction. Au sens de l'invention, une température de fusion Tf stable, signifie que la température de fusion n'augmente pas de plus de 3°C après chaque construction par frittage laser, et de préférence elle n'augmente pas de plus de 2°C et de manière encore plus préférée, elle n'augmente pas plus de 1°C. De préférence, la température de fusion de la poudre polymère est inférieure ou égale à 330°C, de manière davantage préférée inférieure ou égale à 320°C, et de manière encore plus préférée inférieure ou égale à 310°C.

Une telle poudre présente l'avantage d'être stable thermiquement au cours d'un procédé de construction par frittage et n'évolue pas. Sa masse moléculaire notamment reste stable et le phénomène de remontée en viscosité, due à l'augmentation de la masse moléculaire, auquel on assistait jusqu'à présent n'apparait pas ou peu.

De préférence, le traitement thermique préalable de la poudre est réalisé pendant une durée comprise entre 5 min et 120 min, de préférence entre 5 min et 60 min et de manière davantage préférée entre 5 min et 30 min.

Le procédé de construction couche-par-couche par frittage de la poudre au moyen d'un rayonnement électromagnétique est alors réalisé à une température de construction du même ordre de grandeur que celle du traitement thermique préalable. Cette température de construction est inférieure à la température de fusion de la poudre de 40°C, de préférence de 30°C et de manière davantage préférée de 20°C. De préférence, la température de construction est inférieure à 290°C.

La poudre de PAEK peut comprendre un mélange de plusieurs polymères appartenant à la famille des PAEK, et dont la température de fusion Tf est inférieure à 330°C, de préférence inférieure ou égale à 320°C, et de manière encore plus préférée inférieure ou égale à 310°C.

De préférence, la poudre de PAEK comprend au moins une poudre de polyéther-cétone-cétone (PEKK) qui représente plus de 60%, de préférence plus de 70% massique de la poudre, borne comprise. Les 30 à 40% massiques restant peuvent par exemple être constitués soit par d'autres polymères appartenant à la famille des PAEK, et dont la température de fusion est inférieure ou égale à 330°C, et/ou par des charges et /ou par des fibres, telles que des fibres de carbone, des fibres de verre par exemple, par des billes de verre, par des charges minérales, ou encore par des noirs de carbone, des graphites, des graphènes, des nanotubes de carbone.

De manière davantage préférée, la poudre de PAEK est une poudre de PEKK. Avantageusement, cette poudre de PEKK présente un pourcentage massique en motifs téréphtaliques par rapport à la somme des motifs téréphtaliques et isophtaliques compris entre 55 et 65% et de préférence, ce rapport est de 60%.

Du fait de cette stabilité thermique de la poudre, elle peut être utilisée un grand nombre de fois dans des procédés successifs de construction d'objets couche-par-couche, par frittage de la poudre au moyen d'un rayonnement laser par exemple.

De plus, du fait de cette stabilité de la poudre, les paramètres de la machine de construction par frittage, comme la puissance de laser et/ou la température du lit de poudre, demeurent inchangés quel que soit le nombre d'utilisations ultérieures de la poudre. De ce fait, la fabrication d'objets par frittage laser gagne en productivité. La recyclabilité de la poudre étant améliorée le frittage de poudre de PAEK devient économiquement intéressant et industriellement possible.

Enfin, du fait que les paramètres de frittage demeurent inchangés, il devient possible et facile d'utiliser une poudre comprenant un mélange de différentes poudres recyclées ou non, les poudres recyclées pouvant en outre avoir été utilisées un nombre de cycles identique et/ou différent.

La poudre selon l'invention est donc très intéressante économiquement puisqu'elle peut être recyclée plusieurs fois dans un procédé de frittage, tout en garantissant les mêmes réglages de la machine de construction.

L'invention porte enfin sur un article tridimensionnel, obtenu par frittage de la poudre qui vient d'être décrite, couche-par-couche, à l'aide d'un rayonnement électromagnétique, de type laser par exemple. L'objet obtenu présente des propriétés mécaniques satisfaisantes et constantes quel que soit le nombre d'utilisations de la poudre.

### Exemples :

### 1. Evolution de poudres de PAEK après un premier frittage

Deux poudres de PEKK sont comparées : une poudre de PEKK de référence, comprenant 60% de motifs téréphtaliques et 40% de motifs isophtaliques et n'ayant pas subi de traitement thermique préalable, et une poudre de PEKK selon l'invention, comprenant 60% de motifs téréphtaliques et 40% de motifs isophtaliques.

Après synthèse des deux polymères de PEKK, ils sont broyés à l'état de poudre. Seule, la poudre selon l'invention subit un traitement thermique préalable de 120 minutes à 285°C.

La viscosité en solution dans l'acide sulfurique à 96% de la poudre de référence est alors mesurée à 0,87dl/g. La viscosité de la poudre selon l'invention en solution dans l'acide sulfurique à 96% est mesurée à 0,85dl/g. Les viscosités sont mesurées à 25°C à l'aide d'un viscosimètre de type tube Ubbelohde.

Les deux poudres sont ensuite placées chacune dans un tube sous balayage d'azote et chauffée à 285°C pendant 24 heures. Chaque poudre est alors à nouveau analysée en viscosité en solution et on trouve une viscosité de 0,90dl/g pour la poudre de référence et une viscosité de 0,85 dl/g pour la poudre selon l'invention. Par conséquent, la viscosité de la poudre de référence augmente de plus de 3% après 24 heures à 285°C, tandis que la viscosité de la poudre selon l'invention reste constante. L'incertitude sur la mesure correspond à 0.01dl/g.

**Tableau I**

| | Viscosité inhérente à t0 (en dl/g) | Viscosité inhérente après 24h à 285°C (en dl/g) | Evolution de la viscosité inhérente |
|---|---|---|---|
| PEKK référence | 0,87 | 0,90 | +3.4% |
| PEKK invention | 0,85 | 0,85 | env 0% ou <1% |

La poudre de PEKK selon l'invention présente une viscosité inhérente qui n'évolue pas de manière significative (évolution comprise entre 0 et 1% qui correspond à l'incertitude sur la mesure), contrairement à la poudre de référence pour laquelle la viscosité inhérente augmente de manière significative avec une augmentation supérieure à 3%.

### 2. Aptitude au recyclage après frittage à une température de construction égale à Tf-15°C

Les deux poudres de l'exemple 1 ainsi qu'une poudre de PEEK commercialisée par la société EOS sous la référence HP3, ont été comparées après un premier frittage à une température de 15°C en dessous de leurs températures de fusion respectives, et leur aptitude au recyclage à l'issue de ce frittage a été évaluée.

La poudre de PEEK HP3 présente une température de fusion de 372°C. La poudre de PEKK de référence présente avant le premier frittage, une température de fusion Tf1 de 300°C, mais cette température évolue et augmente à l'issue du premier frittage, d'une quinzaine de degrés. La poudre de PEKK selon l'invention, quant à elle, présente une température de fusion moyenne de 300°C et qui reste constante à l'issue du procédé de frittage. On parle ici de « température de fusion moyenne » car, même si elle n'évolue pas, elle peut être légèrement différente selon les lots de poudre et varie entre 297 et 303°C.

La mesure de la température de fusion est réalisée par mesure de calorimétrie différentielle à balayage DSC (acronyme anglo-saxon de « Differential Scanning Calorimetry ») selon la norme ISO11357-3.

L'homme du métier sait que, pour une poudre de PAEK, il est usuel de chauffer la chambre de construction à une température de construction de 10 à 20°C (typiquement 15°C) en dessous de la température de fusion du matériau polymère constitutif de la poudre afin de pouvoir réaliser un objet tridimensionnel en frittage laser avec de bonnes performances en termes de frittage et de propriétés mécaniques de l'objet final obtenu.

Des essais de frittage laser ont été réalisés sur un appareil DTM Sinter station 2500 modifiée pour être capable de travailler à haute température (c'est à dire jusqu'à 300°C). La poudre non soumise au faisceau laser, et donc non frittée, restante dans le bac de construction, aussi appelée « poudre à recycler », a été récupérée.

La poudre initiale, c'est-à-dire avant sa première utilisation dans la machine de frittage laser et la poudre à recycler ont été comparées par mise en solution. Pour cela, environ 30 mg de poudre est dissout dans 1 ml de 4-chlorophénol à 150°C pendant 24h. Après refroidissement de la solution à température ambiante, 14 ml de Hexafluoroisopropanol (HFIP) sont ajoutés. La solution est filtrée sur un filtre seringue de la marque Acrodisc avec une membrane en polytétrafluoroéthylène (PTFE) d'un diamètre de 25mm et d'une porosité de 0,2µm.

**Tableau II**

| | HP3 | PEKK Référence | PEKK invention |
|---|---|---|---|
| Tf poudre initiale | 372°C | Tf₁ (300°C) | 300°C |
| Solubilité poudre initiale | Soluble | Soluble | Soluble |
| Tf poudre à recycler | 386°C | Tf₂ > Tf₁ d'environ 15 °C | 300°C |
| Solubilité poudre à recycler | Insoluble (>99% d'insolubles) | Soluble (<5% d'insolubles) | Soluble (<5% d'insolubles) |

Les résultats, rassemblés dans le tableau II ci-dessus, démontrent que lorsque la température de construction est réglée sur 15 °C en dessous de la température de fusion, la poudre de PEEK HP3, une fois utilisée, devient insoluble avec plus de 99% en poids de particules insolubles, ce qui signifie qu'elle a réticulé, sa masse moléculaire a augmenté et le polymère a changé de structure.

Les deux autres poudres de PEKK sont solubles, avec moins de 5% en poids de particules insolubles, ce qui signifie qu'elles peuvent être réutilisées.

Cependant, la poudre de PEKK de référence, après le premier frittage, présente une deuxième température de fusion Tf₂ supérieure à la première d'une quinzaine de degrés. Cette augmentation de la température de fusion a pour conséquence, pour pouvoir recycler à nouveau la poudre dans un procédé de frittage laser, de modifier les paramètres de frittage, et notamment la température de construction, mais aussi la puissance du faisceau laser.

La poudre de PEKK selon l'invention présente une température de fusion constante durant le procédé de frittage laser. Elle permet ainsi l'obtention d'une ou plusieurs autre(s) pièce(s) frittée(s) sans changer les paramètres de l'appareil de frittage.

### 3. Aptitude au frittage à température de construction constante

Les trois poudres HP3, PEKK de référence et PEKK selon l'invention sont à nouveau comparées pour leur aptitude au frittage à une température de construction fixe, constante quel que soit le nombre de cycles de frittage.

Pour pouvoir recycler la poudre, l'expérience a été menée en fixant la température de construction à 285°C, afin d'éviter une dégradation thermique de la poudre et pouvoir la recycler dans des constructions ultérieures par frittage laser. Le frittage est réalisé dans les mêmes conditions expérimentales, en particulier à une température de construction fixe et pour une puissance laser adaptée et constante.

La poudre initiale, c'est-à-dire avant le premier frittage, a été comparée à la poudre récupérée dans le bac de construction après frittage (=poudre à recycler) et à une poudre recyclée une fois. Pour chacune de ces poudres, les propriétés mécaniques des éprouvettes frittées ont été mesurées et comparées, notamment le module de traction et l'allongement à la rupture.

Les résultats de ces comparaisons sont rassemblés dans le tableau III ci-dessous.

**Tableau III**

| | HP3 | PEKK Référence | PEKK invention |
|---|---|---|---|
| Propriétés mécaniques objet obtenu après 1^{er} frittage | insuffisantes | bonnes | bonnes |
| Aptitude de la poudre à être recyclée une première fois | OUI | OUI | OUI |
| Propriétés mécaniques objet obtenu après 2eme frittage | insuffisantes | insuffisantes | bonnes |
| Aptitude de la poudre à être recyclée une deuxième fois | OUI | OUI | OUI |

Il s'avère qu'à la température de construction de 285°C, cette température étant bien inférieure à la température de fusion de 372°C de la poudre de PEEK HP3, cette poudre HP3 n'est pas dégradée et peut être recyclée. En revanche, à cette température, la poudre n'est pas convenablement frittée et l'objet tridimensionnel obtenu ne présente pas de bonnes propriétés mécaniques, il ne passe pas les tests.

Le PEKK de référence est également recyclable et l'objet obtenu après le premier frittage présente de bonnes propriétés mécaniques. En revanche, si on laisse la même température de construction à 285°C pour un deuxième essai alors, dans ce cas, la poudre est à nouveau recyclable mais l'objet tridimensionnel obtenu présente des propriétés mécaniques dont les performances sont significativement diminuées.

Dans ce cas, seule la poudre de PEKK selon l'invention permet l'obtention d'éprouvettes frittées avec de bonnes propriétés mécaniques, quel que soit le nombre de cycles de frittage et ce, avec des paramètres de frittage inchangés, aussi bien en température de construction qu'en puissance de faisceau laser.

### 4. Essais successifs de frittage de différentes poudres dans des conditions classiques de frittage

Le tableau IV ci-dessous rassemble les paramètres de la machine de frittage laser, dans le cadre de constructions successives, faites dans des conditions classiques, avec les trois poudres de HP3, PEKK de référence et PEKK selon l'invention, pour permettre l'obtention de pièces frittées présentant des propriétés mécaniques satisfaisantes. Le nombre de constructions (essais) indiqué dans le tableau est de 4, mais, pour la poudre selon l'invention, des pièces frittées ont pu être obtenues avec de la poudre recyclée un plus grand nombre de fois sans observer de diminution significative des propriétés mécaniques.

**Tableau IV**

| | Puissance Laser (W) | | | Température de construction (°C) | | |
|---|---|---|---|---|---|---|
| | HP3 | PEKK Référence | PEKK invention | HP3 | PEKK Référence | PEKK invention |
| Essai 1 | 30 | 30 | 30 | 357 | 285 | 285 |
| Essai 2 | - | 39 | 30 | - | 300 | 285 |
| Essai 3 | - | 42 | 30 | - | 300 | 285 |
| Essai 4 | - | - | 30 | - | - | 285 |

Ce tableau met en évidence que la poudre de PEKK selon l'invention, utilisée plusieurs fois consécutives pour réaliser des objets tridimensionnels couche-par-couche, par frittage laser de la poudre, permet l'obtention d'objets présentant des propriétés mécaniques satisfaisantes et stables quel que soit le nombre de recyclage de la poudre. De plus, les paramètres de construction de la machine de frittage laser demeurent inchangés quel que soit le nombre de recyclage de la poudre.

Il a été observé, avec la poudre de PEKK de référence, selon l'art antérieur, que les propriétés mécaniques de l'objet tridimensionnel obtenu après 2 cycles sont affectées et commencent à diminuer. Il devient donc très difficile de recycler cette poudre dans des procédés de frittage au-delà de 3 ou 4 cycles.

La poudre de PAEK selon l'invention qui vient d'être décrite, avec une température de fusion stable inférieure à 330°C et de préférence inférieure ou égale à 310°C, présente une recyclabilité améliorée, si bien qu'elle devient économiquement très intéressante. Elle permet de réaliser des constructions d'objets tridimensionnels par frittage, sans changer les paramètres du procédé de frittage, si bien qu'elle permet d'améliorer significativement la productivité. Enfin, les objets tridimensionnels obtenus présentent des propriétés mécaniques satisfaisantes et constantes quel que soit le nombre de cycles.

## Revendications

1. Poudre de poly-(aryl-éther-cétone) (PAEK) destinée à être utilisée dans un procédé de construction d'objets couche par couche par frittage provoqué par un rayonnement électromagnétique , ladite poudre étant **caractérisée en ce qu'**elle est issue d'un traitement thermique préalable à une température comprise entre 260 et 290 °C, de préférence entre 280 et 290°C, et **en ce qu'**elle présente une température de fusion stable, à la température de construction et inférieure ou égale à 330°C, de préférence inférieure ou égale à 320°C et de manière encore plus préférée, inférieure ou égale à 310°C, une température de fusion Tf stable signifiant que la température de fusion n'augmente pas de plus de 3°C après chaque construction par frittage laser, et **en ce qu'**elle comprend un mélange de poudres recyclées et non recyclées, lesdites poudres recyclées ayant été utilisées un nombre de cycles identiques et / ou différent, et la mesure de la température de fusion est réalisée par mesure de calorimétrie différentielle à balayage DSC selon la norme IS011357-3.

2. Poudre selon la revendication 1, **caractérisée en ce que** son traitement thermique préalable est réalisé pendant une durée comprise entre 5 min et 120 min, de préférence entre 5 min et 60 min et de manière davantage préférée entre 5 min et 30 min.

3. Poudre selon l'une quelconque des revendications 1 ou 2, **caractérisée en ce qu'**elle comprend un mélange de plusieurs polymères appartenant à la famille des PAEK, dont la température de fusion Tf est inférieure ou égale à 330°C, de préférence inférieure ou égale à 320°C et de manière encore plus préférée inférieure ou égale à 310°C.

4. Poudre selon l'une quelconque des revendications 1 à 3, **caractérisée en ce qu'**elle comprend au moins une poudre de polyéther-cétone-cétone (PEKK) qui représente plus de 60% massique, de préférence plus de 70% massique de la poudre, borne comprise.

5. Poudre selon l'une quelconque des revendications 1 ou 2, **caractérisée en ce que** la poudre est une poudre de polyéther-cétone-cétone (PEKK).

6. Poudre selon la revendication 4 ou 5, **caractérisée en ce que** la poudre de PEKK présente un pourcentage massique en motifs téréphtaliques par rapport à la somme des motifs téréphtaliques et isophtaliques compris entre 55 et 65%.

7. Poudre selon l'une des revendications 1 à 6, **caractérisée en ce que** sa masse moléculaire reste stable au cours du procédé de construction par frittage.

8. Poudre selon l'une des revendications 1 à 7, **caractérisée en ce que** sa température de fusion n'augmente pas de plus de 2°C après chaque construction par frittage.

9. Poudre selon l'une des revendications 1 à 7, **caractérisée en ce que** sa température de fusion n'augmente pas de plus de 1°C après chaque construction par frittage.

10. Utilisation de la poudre selon l'une des revendications 1 à 9, dans un procédé de construction d'objet couche-par-couche par frittage laser, ladite poudre étant réutilisable dans plusieurs constructions successives.

11. Procédé de construction d'un objet tridimensionnel couche-par-couche par frittage de poudre provoqué par un rayonnement électromagnétique, **caractérisé en ce que** la poudre utilisée est conforme à l'une des revendications 1 à 9.

12. Procédé selon la revendication 11, dans lequel on procède à des frittages successifs en conservant inchangés les paramètres de la machine de frittage.

13. Procédé selon la revendication 12, dans lequel les paramètres de la machine de frittage comprennent la puissance du laser et/ou la température du lit de poudre.

14. Article tridimensionnel obtenu par frittage d'une poudre couche-par-couche à l'aide d'un rayonnement électromagnétique, ladite poudre étant **caractérisée en ce qu'**elle est conforme à l'une de revendication 1 à 9.

## Patentansprüche

1. Poly-(aryl-ether-keton)-Pulver (PAEK) zur Verwendung in einem Verfahren zum schichtweisen Aufbau von Objekten durch Sintern, hervorgerufen durch eine elektromagnetische Strahlung, wobei das Pulver **dadurch gekennzeichnet ist, dass** es aus einer vorherigen Wärmebehandlung bei einer Temperatur zwischen 260 und 290°C, vorzugsweise zwischen 280 und 290°C, hervorgegangen ist, und dass es bei Aufbautemperatur eine stabile Schmelztemperatur aufweist, die kleiner oder gleich 330°C, vorzugsweise kleiner oder gleich 320°C und noch bevorzugter kleiner oder gleich 310°C ist, wobei eine stabile Schmelztemperatur Tf bedeutet, dass die Schmelztemperatur nach jedem Aufbau durch Lasersintern nicht um mehr als 3°C steigt, und dass es ein Gemisch aus recycelten und nicht recycelten Pulvern umfasst, wobei die recycelten Pulver eine identische und/oder unterschiedliche Zyklusanzahl verwendet wurden, und die Messung der Schmelztemperatur durch Differential Scanning Calorimetry DSC gemäß der Norm ISO 11357-3 durchgeführt wird.

2. Pulver nach Anspruch 1, **dadurch gekennzeichnet, dass** seine vorherige Wärmebehandlung während einer Dauer zwischen 5 min und 120 min, vorzugsweise zwischen 5 min und 60 min und noch stärker bevorzugt zwischen 5 min und 30 min durchgeführt wird.

3. Pulver nach einem der Ansprüche 1 oder 2, **dadurch gekennzeichnet, dass** es ein Gemisch aus mehreren Polymeren umfasst, die zur Familie der PAEK gehören, deren Schmelztemperatur Tf kleiner oder gleich 330°C, vorzugsweise kleiner oder gleich 320°C und noch bevorzugter kleiner oder gleich 310°C ist.

4. Pulver nach einem der Ansprüche 1 bis 3, **dadurch gekennzeichnet, dass** es mindestens ein Polyether-Keton-Keton-Pulver (PEKK) umfasst, das über 60 Ma%, vorzugsweise über 70 Ma%, des Pulvers, Grenze eingeschlossen, darstellt.

5. Pulver nach einem der Ansprüche 1 oder 2, **dadurch gekennzeichnet, dass** das Pulver ein Polyether-Keton-Keton-Pulver (PEKK) ist.

6. Pulver nach Anspruch 4 oder 5, **dadurch gekennzeichnet, dass** das PEKK-Pulver einen Massenprozentsatz an Terephthalat-Einheiten, bezogen auf die Summe der Terephthalat- und Isophthalat-Einheiten, darstellt, der zwischen 55 und 65% liegt.

7. Pulver nach einem der Ansprüche 1 bis 6, **dadurch gekennzeichnet, dass** seine Molekularmasse während des Aufbauverfahrens durch Sintern stabil bleibt.

8. Pulver nach einem der Ansprüche 1 bis 7, **dadurch gekennzeichnet, dass** seine Schmelztemperatur nach jedem Aufbau durch Sintern um nicht mehr als 2°C ansteigt.

9. Pulver nach einem der Ansprüche 1 bis 7, **dadurch gekennzeichnet, dass** seine Schmelztemperatur nach jedem Aufbau durch Sintern um nicht mehr als 1°C ansteigt.

10. Verwendung des Pulvers nach einem der Ansprüche 1 bis 9 in einem Verfahren zum schichtweisen Aufbau von Objekten durch Lasersintern, wobei das Pulver in mehreren aufeinanderfolgenden Aufbauten wiederverwendbar ist.

11. Verfahren zum schichtweisen Aufbau eines dreidimensionalen Objekts durch Sintern von Pulver durch elektromagnetische Strahlung, **dadurch gekennzeichnet, dass** das verwendete Pulver einem der Ansprüche 1 bis 9 entspricht.

12. Verfahren nach Anspruch 11, wobei aufeinanderfolgende Sinterungen bei unveränderten Parametern der Sintermaschine durchgeführt werden.

13. Verfahren nach Anspruch 12, wobei die Parameter der Sintermaschine die Leistung des Lasers und/oder die Temperatur des Pulverbetts umfassen.

14. Dreidimensionaler Artikel, erhalten durch schichtweises Sintern eines Pulvers mit Hilfe einer elektromagnetischen Strahlung, wobei das Pulver **dadurch gekennzeichnet ist, dass** es einem der Ansprüche 1 bis 9 entspricht.

## Claims

1. A polyaryletherketone (PAEK) powder for use in a method for constructing objects layer-by-layer by sintering generated by electromagnetic radiation, said powder being **characterised in that** it is produced by a prior heat treatment at a temperature between 260 and 290°C, preferably between 280 and 290°C, and **in that** it has a melting temperature which is stable at the construction temperature, and lower than or equal to 330°C, preferably lower than or equal to 320°C, and more preferably, lower than or equal to 310°C, a stable melting temperature Tf meaning that the melting temperature does not increase by more than 3°C after each construction by laser sintering, and **in that** it comprises a mixture of recycled and non-recycled powders, said recycled powders having been used in a number of identical and/or different cycles, and the measurement of the melting temperature is carried out by differential scanning calorimetry DSC according to standard IS011357-3.

2. The powder according to claim 1, **characterised in that** its prior heat treatment is carried out for a duration between 5 minutes and 120 minutes, preferably between 5 minutes and 60 minutes and more preferably between 5 minutes and 30 minutes.

3. The powder according to any one of claims 1 or 2, **characterised in that** it comprises a mixture of several polymers belonging to the PAEK family, for which the melting temperature Tf is lower than or equal to 330°C, preferably lower than or equal to 320°C and more preferably lower than or equal to 310°C.

4. The powder according to any one of claims 1 to 3, **characterised in that** it comprises at least one polyetherketoneketone (PEKK) powder which represents more than 60% by mass, preferably more than 70% by mass of the powder, limit included.

5. The powder according to any one of claims 1 or 2, **characterised in that** the powder is a polyetherketoneketone (PEKK) powder.

6. The powder according to claim 4 or 5, **characterised in that** the PEKK powder has a percentage by mass of terephthalic units relative to the sum of terephthalic and isophthalic units of between 55 and 65%.

7. The powder according to one of claims 1 to 6, **characterised in that** its molecular mass remains stable throughout the method of construction by sintering.

8. The powder according to one of claims 1 to 7, **characterised in that** its melting temperature does not increase by more than 2°C after each construction by sintering.

9. The powder according to one of claims 1 to 7, **characterised in that** its melting temperature does not increase by more than 1°C after each construction by sintering.

10. Use of the powder according to one of claims 1 to 9, in a method for constructing objects layer-by-layer by laser sintering, said powder being reusable in a plurality of successive constructions.

11. A method for constructing a three-dimensional object layer-by-layer by powder sintering generated by electromagnetic radiation, **characterised in that** the powder used is a powder according to one of claims 1 to 9.

12. The method according to claim 11, in which successive sinterings are performed while keeping the sintering machine parameters unchanged.

13. The method according to claim 12, in which the sintering machine parameters comprise the laser power and/or the powder bed temperature.

14. A three-dimensional article obtained by sintering a powder, layer-by-layer, using electromagnetic radiation, said powder being **characterised in that** it is a powder according to one of claims 1 to 9.
